# EUROPEAN PATENT SPECIFICATION

(11) **EP 3 043 621 B1**
(45) Date of publication and mention of the grant of the patent: **29.08.2018**
(21) Application number: 13895317.9
(22) Date of filing: 10.10.2013
(51) Int. Cl.: H04W 24/02, H04W 84/12

(54) **WIRELESS TERMINATION POINT AND CONTROL METHOD AND SYSTEM THEREOF AND WIRELESS CONTROL POINT**
DRAHTLOSER ANSCHLUSSPUNKT, SOWIE KONTROLLVERFAHREN UND -SYSTEM DAFÜR UND DRAHTLOSER KONTROLLPUNKT
POINT DE TERMINAISON SANS FIL, PROCÉDÉ ET SYSTÈME DE COMMANDE ASSOCIÉS ET POINT DE COMMANDE SANS FIL

(43) Date of publication of application: 13.07.2016
(73) Proprietor: Huawei Technologies Co., Ltd., Longgang District Shenzhen, Guangdong 518129 (CN)
(72) Inventor: TANG, Houcheng, Shenzhen Guangdong 518129 (CN); YANG, Hui, Shenzhen Guangdong 518129 (CN); ZHEN, Bin, Shenzhen Guangdong 518129 (CN)
(74) Representative: Epping - Hermann - Fischer
(86) International application number: PCT/CN2013/084973
(87) International publication number: WO 2015/051518

(56) References cited:
- WO-A1-2013/097391
- CN-A- 101 247 295
- CN-A- 103 096 361
- CN-A- 103 297 311
- US-A1- 2007 032 254
- US-A1- 2008 107 071
- CALHOUN P ET AL: "Control And Provisioning of Wireless Access Points (CAPWAP) Protocol Specification; rfc5415.txt", CONTROL AND PROVISIONING OF WIRELESS ACCESS POINTS (CAPWAP) PROTOCOL SPECIFICATION; RFC5415.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 March 2009 (2009-03-01), XP015065502, [retrieved on 2009-03-04]

## Description

### FIELD

The present invention relates to the field of wireless communications, and in particular to a wireless termination point, a control method and system thereof, and a wireless control point.

### BACKGROUND

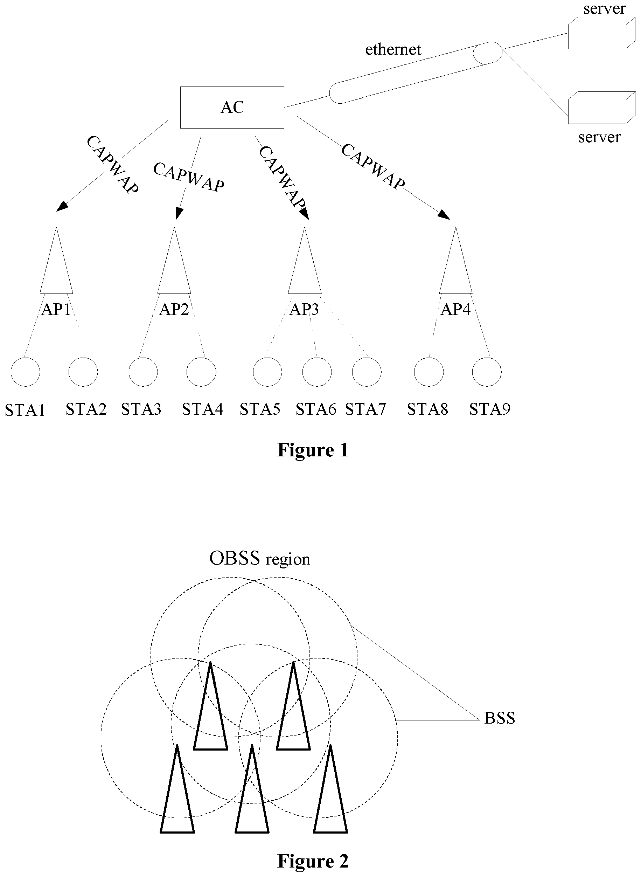

Figure 1 is a schematic diagram of an architecture of a conventional centralized wireless local area network (WLAN) adopting a control and provisioning of wireless access point (CAPWAP) protocol. As shown in Figure 1, the CAPWAP protocol is an application layer protocol established above a user datagram protocol (UDP). Conventionally, the core idea of the CAPWAP protocol is that: a CAPWAP tunnel is established between an access controller (AC) and an access point (AP), and the established CAPWAP tunnel is used to transmit CAPWAP control packets and data packets, so as to perform centralized management and protection on user data. The CAPWAP tunnel includes a control tunnel and a data tunnel. The control tunnel is used to transmit CAPWAP control packets and the data tunnel is used to transmit data packets. The AC can address problems of coverage, access, limited performance of quality of service (QoS) and mutual interference between basic service sets (BSS) in an overlap basic service set (OBSS) region shown in Figure 2, by using channel measurement, interference scheduling, load balance and STA access control by means of the control tunnel.

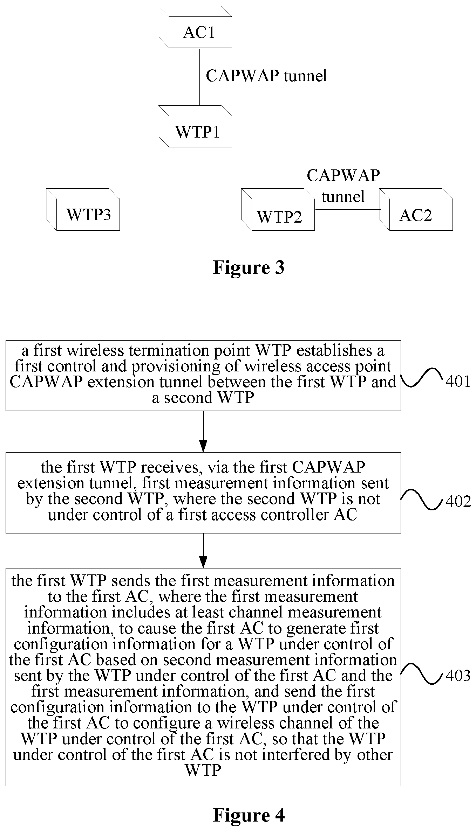

However, as shown in Figure 3, with more and more WLANs are deployed, access devices for WLAN such as a bring your own device (BYOD) and a wireless fidelity (Wi-Fi) direct link device increase continuously, and therefore there are multiple types of APs in the OBSS region, such as a wireless termination point (WTP), including a WTP under control of an AC (WTP1 and WTP2 shown in Figure 3), a WTP not under control of any AC (WTP3 shown in Figure 3), and a WTP under control of ACs (AC1 and AC2) deployed by different operation users (WTP1 and WTP2 shown in Figure 3).

There are multiple types of APs in the OBSS region and currently each AC can only use the CAPWAP tunnel to perform channel measurement, interference scheduling, load balance and STA access control between the WTPs having a control relation with the AC, to address the problems of interference and load balance between BSSs. Each WTP does not trust other ACs to control the WTP itself, hence the AC can only control the WTP connected to the AC and configure a channel of the WTP connected to the AC based on measurement information reported by the WTP connected to the AC, so as to avoid interference between WTPs connected to the AC. However, with the BYOD device and the Wi-Fi direct link device increase, more interferences occur between WTPs under control of different ACs in the OBSS region.

CALHOUN P ET AL: "Control And Provisioning of Wireless Access Points (CAPWAP) Protocol Specification; rfc5415.txt", CONTROL AND PROVISIONING OF WIRELESS ACCESS POINTS (CAPWAP) PROTOCOL SPECIFICATION; RFC5415.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 March 2009 (2009-03-01), XP015065502, discloses the CAPWAP protocol. It is stated that a WTP shall communicate only with one AC.

Document US 2008/107071 discloses a controller that controls the resources used by AP in WLAN. The controller receives measurements from the AP and allocates resources in order to reduce interferences. AP also transmits measurements of stand-alone AP, i.e. of AP that are not under the control of the controller.

### SUMMARY

In view of above, a wireless termination point, a control method and system thereof and a wireless control point are provided according to embodiments of the present invention, to reduce interference between wireless termination points in an OBSS region.

In a first aspect, a control method for a first wireless termination point (WTP) is provided according to an embodiment of the present invention, which includes:
establishing, by the first WTP, a first control and provisioning of wireless access point (CAPWAP) extension tunnel between the first WTP and a second WTP;
receiving, by the first WTP via the first CAPWAP extension tunnel, first measurement information sent by the second WTP, where the second WTP is not under control of a first access controller (AC); and
sending, by the first WTP, the first measurement information to the first AC, where the first measurement information includes at least channel measurement information, to cause the first AC to generate first configuration information for a WTP under control of the first AC based on second measurement information sent by the WTP under control of the first AC and the first measurement information, and send the first configuration information to the WTP under control of the first AC, to configure a wireless channel of the WTP under control of the first AC, so that the WTP under control of the first AC avoids interference from other WTP.

In a first possible implementation of the first aspect, the first WTP is under control of the first AC or is not under control of the first AC, and
in a case that the first WTP is not under control of the first AC, sending, by the first WTP, the first measurement information to the first AC includes:
establishing, by the first WTP, a second CAPWAP extension tunnel between the first WTP and the first AC; and sending, by the first WTP via the second CAPWAP extension tunnel, the first measurement information to the first AC; or
establishing, by the first WTP, a third CAPWAP extension tunnel between the first WTP and a WTP under control of the first AC; and sending, by the first WTP via the third CAPWAP extension tunnel, the first measurement information to the WTP under control of the first AC which sends the first measurement information to the first AC.

In a second possible implementation of the first aspect, the second WTP is under control of a second AC or is not under control of any AC.

In a third possible implementation of the first aspect, establishing, by the first wireless termination point WTP, the first control and provisioning of wireless access point CAPWAP extension tunnel between the first WTP and the second WTP includes:
receiving, by the first WTP, a connection type sent by the second WTP, where the connection type is a tunneled direct link setup (TDLS) tunnel or a datagram transport layer security protocol (DTLS) tunnel;
sending, by the first WTP, the connection type to the second WTP, to cause the second WTP to establish a transmission tunnel between the second WTP and the first WTP based on the connection type;
receiving, by the first WTP via the transmission tunnel, a join request message sent by the second WTP; and
sending, by the first WTP via the transmission tunnel, a join response message to the second WTP, to cause the second WTP to establish the first CAPWAP extension tunnel between the second WTP and the first WTP.

In a second aspect, a control method for a first access controller (AC) is provided according an embodiment of the present invention, which includes:
receiving, by the first AC, first measurement information sent by a first WTP, where the first measurement information is received by the first WTP from a second WTP via a first CAPWAP extension tunnel, the first measurement information includes at least channel measurement information, and the second WTP is not under control of the first AC;
generating, by the first AC, first configuration information for a WTP under control of the first AC based on second measurement information sent by the WTP under control of the first AC and the first measurement information; and
sending, by the first AC, the first configuration information to the WTP under control of the first AC to configure a wireless channel of the WTP under control of the first AC, so that the WTP under control of the first AC avoids interference from other WTP.

In a first possible implementation of the second aspect, the method further includes:
generating, by the first AC, second configuration information for the second WTP based on the first measurement information and the second measurement information; and
sending, by the first AC, the second configuration information to the first WTP, to cause the first WTP to send the second configuration information to the second WTP to configure a wireless channel of the second WTP, so that the second WTP avoids interference from other WTP.

In a second possible implementation of the second aspect, the first WTP is under control of the first AC or is not under control of the first AC, and
in a case that the first WTP is not under control of the first AC, receiving, by the first AC, the first measurement information sent by the first WTP includes:
establishing, by the first AC, a second CAPWAP extension tunnel between the first AC and the first WTP; and receiving, by the first AC via the second CAPWAP extension tunnel, the first measurement information sent by the first WTP; or
receiving, by the first AC, the first measurement information sent by a WTP under control of the first AC, where the first measurement information is received by the WTP under control of the first AC via a third CAPWAP extension tunnel between the WTP under control of the first AC and the first WTP.

In conjunction with the second possible implementation of the second aspect, establishing, by the first AC, the second CAPWAP extension tunnel between the first AC and the first WTP includes:
receiving, by the first AC, an event request message sent by the WTP under control of the first AC, where the event request message carries information about the first WTP; and
sending, by the first AC, an event response message to the WTP under control of the first AC based on the information about the first WTP, to cause the WTP under control of the first AC to send a management permit instruction to the first WTP based on the event response message, wherein the management permit instruction is configured to instruct the first WTP to establish the second CAPWAP extension tunnel between the first WTP and the first AC.

In a third aspect, a wireless termination point is provided according to an embodiment of the present invention, which includes:
an establishing unit configured to establish a first control and provisioning of wireless access point (CAPWAP) extension tunnel between the wireless termination point and a second WTP;
a receiving unit configured to receive, via the first CAPWAP extension tunnel, first measurement information sent by the second WTP, where the second WTP is not under control of a first access controller (AC); and
a sending unit configured to send the first measurement information to the first AC, where the first measurement information includes at least channel measurement information, to cause the first AC to generate first configuration information for a WTP under control of the first AC based on second measurement information sent by the WTP under control of the first AC and the first measurement information, and send the first configuration information to the WTP under control of the first AC to configure a wireless channel of the WTP under control of the first AC, so that the WTP under control of the first AC avoids interference from other WTP.

In a first possible implementation of the third aspect, the wireless termination point is under control of the first AC or is not under control of the first AC, and
in a case that the wireless termination point is not under control of the first AC,
the establishing unit is further configured to establish a second CAPWAP extension tunnel between the wireless termination point and the first AC; and
the sending unit is configured to send, via the second CAPWAP extension tunnel, the first measurement information to the first AC; or
the establishing unit is further configured to establish a third CAPWAP extension tunnel between the wireless termination point and a WTP under control of the first AC; and
the sending unit is configured to send, via the third CAPWAP extension tunnel, the first measurement information to the WTP under control of the first AC which sends the first measurement information to the first AC.

In a second possible implementation of third aspect, the second WTP is under control of a second AC or is not under control of any AC.

In a third possible implementation of the third aspect, the receiving unit is further configured to receive a connection type sent by the second WTP, where the connection type is a tunneled direct link setup (TDLS) tunnel or a datagram transport layer security protocol (DTLS) tunnel;
the sending unit is further configured to send the connection type to the second WTP, to cause the second WTP to establish a transmission tunnel between the second WTP and the wireless termination point based on the connection type;
the receiving unit is further configured to receive, via the transmission tunnel, a join request message sent by the second WTP; and
the sending unit is further configured to send, via the transmission tunnel, a join response message to the second WTP, to cause the second WTP to establish the first CAPWAP extension tunnel between the second WTP and the wireless termination point.

In a fourth aspect, an access controller for controlling wireless termination points is provided according to an embodiment of the present invention, which includes:
a receiving unit configured to receive first measurement information sent by a first WTP, where the first measurement information is received by the first WTP from a second WTP via a first CAPWAP extension tunnel, the first measurement information includes at least channel measurement information, and the second WTP is not under control of the wireless control point;
a processing unit configured to generate first configuration information for a WTP under control of the wireless control point based on second measurement information sent by the WTP under control of the wireless control point and the first measurement information; and
a sending unit configured to send the first configuration information to the WTP under control of the wireless control point to configure a wireless channel of the WTP under control of the wireless control point, so that the WTP under control of the wireless control point avoids interference from other WTP.

In a first possible implementation of the fourth aspect, the processing unit is further configured to generate second configuration information for the second WTP based on the first measurement information and the second measurement information; and
the sending unit is further configured to send the second configuration information to the first WTP, to cause the first WTP to send the second configuration information to the second WTP to configure a wireless channel of the second WTP, so that the second WTP avoids interference from other WTP.
In a second possible implementation of the fourth aspect, the first WTP is under control of the wireless control point or is not under control of the wireless control point, and

in a case that the first WTP is not under control of the wireless control point,
the wireless control point further includes an establishing unit configured to establish a second CAPWAP extension tunnel between the wireless control point and the first WTP, the receiving unit is further configured to receive, via the second CAPWAP extension tunnel, the first measurement information sent by the first WTP; or
the receiving unit is further configured to receive the first measurement information sent by the WTP under control of the wireless control point, where the first measurement information is received by a WTP under control of the wireless control point via a third CAPWAP extension tunnel between the WTP under control of the wireless control point and the first WTP.

In conjunction with the second possible implementation of the fourth aspect, the receiving unit is further configured to receive an event request message sent by the WTP under control of the wireless control point, where the event request message carries information about the first WTP; and
the sending unit is further configured to send an event response message to the WTP under control of the wireless control point based on the information about the first WTP, to cause the WTP under control of the wireless control point to send a management permit instruction to the first WTP based on the event response message, where the management permit instruction is configured to instruct the first WTP to establish a second CAPWAP extension tunnel between the first WTP and the wireless control point.

In a fifth aspect, a control system for a wireless access point is provided according to an embodiment of the present invention, the system includes a first wireless termination point (WTP), a second WTP and a first access controller (AC), where
the first WTP is configured to establish a first control and provisioning of wireless access point (CAPWAP) extension tunnel between the first WTP and a second WTP, and receive, via the first CAPWAP extension tunnel, first measurement information sent by the second WTP, where the second WTP is not under control of the first access controller (AC);
the first WTP is further configured to send the first measurement information to the first AC, where the first measurement information includes at least channel measurement information; and the first AC is configured to generate first configuration information for a WTP under control of the first AC based on second measurement information sent by the WTP under control of the first AC and the first measurement information, and send the first configuration information to the WTP under control of the first AC, to configure a wireless channel of the WTP under control of the first AC, so that the WTP under control of the first AC is not interfered by other WTP.

In a first possible implementation of the fifth aspect, the first WTP is under control of the first AC or is not under control of the first AC, and
in a case that the first WTP is not under control of the first AC, the first WTP sending the first measurement information to the first AC includes:
the first WTP establishing a second CAPWAP extension tunnel between the first WTP and the first AC, and the first WTP sending, via the second CAPWAP extension tunnel, the first measurement information to the first AC; or
the first WTP establishing a third CAPWAP extension tunnel between the first WTP and the WTP under control of the first AC, and the first WTP sending, via the third CAPWAP extension tunnel, the first measurement information to the WTP under control of the first AC which sends the first measurement information to the first AC.

In a second possible implementation of the fifth aspect, the second WTP is under control of a second AC or is not under control of any AC.

In a third possible implementation of the fifth aspect, the first wireless termination point WTP establishing the first control and provisioning of wireless access point CAPWAP extension tunnel between the first WTP and the second WTP includes:
the first WTP receiving a connection type sent by the second WTP, where the connection type is a tunneled direct link setup (TDLS) tunnel or a datagram transport layer security protocol (DTLS) tunnel;
the first WTP sending the connection type to the second WTP, to cause the second WTP to establish a transmission tunnel between the second WTP and the first WTP based on the connection type;
the first WTP receiving, via the transmission tunnel, a join request message sent by the second WTP; and
the first WTP sending, via the transmission tunnel, a join response message to the second WTP, to cause the second WTP to establish the first CAPWAP extension tunnel between the second WTP and the first WTP.

In a fourth possible implementation of the fifth aspect, the first AC is further configured to generate second configuration information for the second WTP based on the first measurement information and the second measurement information, and send the second configuration information to the first WTP, to cause the first WTP to send the second configuration information to the second WTP to configure a wireless channel of the second WTP, so that the second WTP is not interfered by other WTP.

In a fifth possible implementation of the fifth aspect, the first AC establishing the second CAPWAP extension tunnel between the first AC and the first WTP includes:
the first AC receiving an event request message sent by the WTP under control of the first AC, where the event request message carries information about the first WTP; and
the first AC sending an event response message to the WTP under control of the first AC based on the information about the first WTP, to cause the WTP under control of the first AC to send a management permit instruction to the first WTP based on the event response message, where the management permit instruction is configured to instruct the first WTP to establish the second CAPWAP extension tunnel between the first WTP and the first AC.

With the above technical solutions, the first WTP acts as a local coordinator device, which obtains corresponding measurement information from other WTPs and reports the measurement information to the AC, such that the AC may generate configuration information for a WTP under control of the AC based on measurement information of the WTP under control of the AC and measurement information of the WTP not under control of the AC, and the first WTP configures a wireless frequency band of the WTP based on the configuration information, to assist the AC to obtain a management right for WTPs in a large range, and thereby solving the coordination problem between multiple types of WTPs, reducing interference between the WTPs and avoiding interference between the WTPs in the OBSS region.

### BRIEF DESCRIPTION OF THE DRAWINGS

In order to describe the technical solutions of embodiments of the present invention more clearly, drawings to be used in the embodiments are introduced simply below. Apparently, the drawings described below are only some embodiments of the present invention, and other drawings may be obtained based on these drawings by those skilled in the art without any creative work.
Figure 1 is a schematic diagram of an architecture of a centralized WLAN adopting a CAPWAP protocol in the conventional technology;
Figure 2 is a schematic diagram of an architecture of an OBSS region in the conventional technology;
Figure 3 is a schematic diagram of WTPs in an OBSS region in the conventional technology;
Figure 4 is a schematic flowchart of a first control method for a wireless termination point provided by an embodiment of the present invention;
Figure 5 is a schematic flowchart of a second control method for a wireless termination point provided by an embodiment of the present invention;
Figure 6 is a schematic diagram of networking of a first embodiment of a control method for a wireless termination point provided by an embodiment of the present invention;
Figure 7 is a schematic diagram of networking of a second embodiment of a control method for a wireless termination point provided by an embodiment of the present invention;
Figure 8 is a schematic diagram of networking of a third embodiment of a control method for a wireless termination point provided by an embodiment of the present invention;
Figure 9 is a schematic diagram of networking of a fourth embodiment of a control method for a wireless termination point provided by an embodiment of the present invention;
Figure 10 is a schematic diagram of networking of a fifth embodiment of a control method for a wireless termination point provided by an embodiment of the present invention;
Figure 11 is a functional block diagram of a wireless termination point provided by an embodiment of the present invention;
Figure 12 is a schematic structural diagram of a wireless termination point provided by an embodiment of the present invention;
Figure 13 is a functional block diagram of a wireless control point provided by an embodiment of the present invention;
Figure 14 is a schematic structural diagram of a wireless control point provided by an embodiment of the present invention; and
Figure 15 is a functional block diagram of a control system for a wireless termination point provided by an embodiment of the present invention.

### DETAILED DESCRIPTION OF THE EMBODIMENTS

In order to understand the technical solutions of the present invention better, hereinafter the embodiments of the present invention are described in detail in conjunction with the drawings.

It should be understood that the described embodiments are only some but not all of embodiments of the present invention. Any other embodiments obtained based on these embodiments of the present invention by those skilled in the art without any creative work fall within the scope of protection of the present disclosure.

A control method for a wireless termination point is provided according to an embodiment of the present invention. Figure 4 is a schematic flowchart of a first control method for a wireless termination point provided by an embodiment of the present invention. The method includes step 401 to step 403, as shown in Figure 4.

In step 401, a first wireless termination point (WTP) establishes a first control and provisioning of wireless access point (CAPWAP) extension tunnel between the first WTP and a second WTP.

In step 402, the first WTP receives, via the first CAPWAP extension tunnel, first measurement information sent by the second WTP, where the second WTP is not under control of a first access controller (AC).

In step 403, the first WTP sends the first measurement information to the first AC, where the first measurement information includes at least channel measurement information, to cause the first AC to generate first configuration information for a WTP under control of the first AC based on second measurement information sent by the WTP under control of the first AC and the first measurement information, and send the first configuration information to the WTP under control of the first AC, to configure a wireless channel of the WTP under control of the first AC, so that the WTP under control of the first AC is not interfered by other WTP.

In the above method, the first WTP is under control of the first AC or is not under control of the first AC.

In a case that the first WTP is not under control of the first AC, the first WTP sending the first measurement information to the first AC includes:
the first WTP establishing a second CAPWAP extension tunnel between the first WTP and the first AC, and the first WTP sending, via the second CAPWAP extension tunnel, the first measurement information to the first AC; or the first WTP establishing a third CAPWAP extension tunnel between the first WTP and the WTP under control of the first AC, and the first WTP sending, via the third CAPWAP extension tunnel, the first measurement information to the WTP under control of the first AC which sends the first measurement information to the first AC.

The second WTP is under control of a second AC or is not under control of any AC.

In the above method, the first wireless termination point (WTP) establishing the first control and provisioning of wireless access point (CAPWAP) extension tunnel between the first WTP and the second WTP includes:
the first WTP receiving a connection type sent by the second WTP, where the connection type is a tunneled direct link setup (TDLS) tunnel or a datagram transport layer security protocol (DTLS) tunnel;
the first WTP sending the connection type to the second WTP, to cause the second WTP to establish a transmission tunnel between the second WTP and the first WTP based on the connection type;
the first WTP receiving, via the transmission tunnel, a join request message sent by the second WTP; and
the first WTP sending, via the transmission tunnel, a join response message to the second WTP, to cause the second WTP to establish the first CAPWAP extension tunnel between the second WTP and the first WTP.

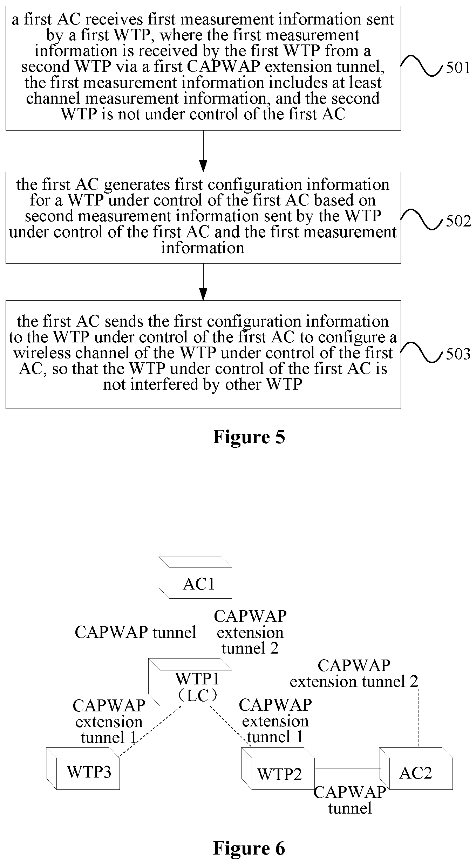

A control method for a wireless termination point is provided according to an embodiment of the present invention. Figure 5 is a schematic flowchart of a second control method for a wireless termination point provided by an embodiment of the present invention. The method includes step 501 to step 503, as shown in Figure 5.

In step 501, a first AC receives first measurement information sent by a first WTP, where the first measurement information is received by the first WTP from a second WTP via a first CAPWAP extension tunnel, the first measurement information includes at least channel measurement information, and the second WTP is not under control of the first AC.

In step 502, the first AC generates first configuration information for a WTP under control of the first AC based on second measurement information sent by the WTP under control of the first AC and the first measurement information.

In step 503, the first AC sends the first configuration information to the WTP under control of the first AC to configure a wireless channel of the WTP under control of the first AC, so that the WTP under control of the first AC is not interfered by other WTP.

The method may further include: the first AC generating second configuration information for the second WTP based on the first measurement information and the second measurement information; the first AC sending the second configuration information to the first WTP, to cause the first WTP to send the second configuration information to the second WTP to configure a wireless channel of the second WTP, so that the second WTP is not interfered by other WTP.

The first WTP is under control of the first AC or is not under control of the first AC. In a case that the first WTP is not under control of the first AC, the first AC receiving the first measurement information sent by the first WTP includes:
the first AC establishing a second CAPWAP extension tunnel between the first AC and the first WTP; and the first AC receiving, via the second CAPWAP extension tunnel, the first measurement information sent by the first WTP; or the first AC receiving the first measurement information sent by the WTP under control of the first AC, where the first measurement information is received by the WTP under control of the first AC via a third CAPWAP extension tunnel between the WTP under control of the first AC and the first WTP.

The first AC establishing the second CAPWAP extension tunnel between the first AC and the first WTP includes:
the first AC receiving an event request message sent by the WTP under control of the first AC, where the event request message carries information about the first WTP; and
the first AC sending an event response message to the WTP under control of the first AC based on the information about the first WTP, to cause the WTP under control of the first AC to send a management permit instruction to the first WTP based on the event response message, where the management permit instruction is configured to instruct the first WTP to establish the second CAPWAP extension tunnel between the first WTP and the first AC.

### First embodiment

Figure 6 is a schematic diagram of networking of a first embodiment of a control method for a wireless termination point provided by an embodiment of the present invention. Figure 6 illustrates a CAPWAP extension architecture belonging to different managers in an overlap region covered by WTPs. ACs belonging to different controllers (for example, AC1 and AC2), WTPs under control of different ACs (for example, WTP1 and WTP2), a WTP not under control of any AC (for example, WTP3) and a WTP having a local coordinator function (Local Coordinator, LC) (for example, WTP1) are included in the overlap region.

In Figure 6, the WTP1 is a WTP having the LC function, which is equivalent to the first WTP. The WTP1 may be connected to the WTP2 (equivalent to the second WTP) and the WTP3 (equivalent to the second WTP) via CAPWAP extension tunnel 1 (equivalent to the first CAPWAP extension tunnel), and the LC may be connected to the AC1 (equivalent to the first AC) and the AC2 (equivalent to the second AC) via CAPWAP extension tunnel 2.

At least two WTPs in the overlap region may obtain a local management coordination function by competing. The way for competing by at least two WTPs includes a way of first access, a way of strong calculation resource or a way of high version.

The CAPWAP extension tunnel 1 (equivalent to the first CAPWAP extension tunnel) is a control tunnel. The WTP2 and the WTP3 may send measurement information (equivalent to the second measurement information) to the WTP1 via the CAPWAP extension tunnel 1. The measurement information includes channel measurement information, QoS performance measurement information and device error measurement information and so on.

The AC1 generates configuration information for a WTP under control of the AC1 (equivalent to the first configuration information) based on measurement information of the WTP2 and WTP3 and measurement information of the WTP under control of the AC1, and sends the configuration information to the WTP under control of the AC1, to ensure that the WTP under control of the AC1 is not interfered by other WTP. The AC1 then generates configuration information for the WTP2 and WTP3 based on the measurement information of the WTP2 and WTP3 and the measurement information of the WTP under control of the AC1. The WTP1 receives the configuration information of the WTP2 and WTP3 and then sends the configuration information (equivalent to the second configuration information) to the WTP2 and WTP3 via the CAPWAP extension tunnel 1. The configuration information is configured to configure, for example, wireless channels and STA loads of the WTP2 and WTP3, to control wireless frequency bands of the WTP2 and WTP3, so as to avoid interference from other WTPs, and thereby reducing interference between WTPs.

The CAPWAP extension tunnel 2 (equivalent to the second CAPWAP extension tunnel) is a control tunnel. The WTP1 may send the measurement information of the WTP2 and/or WTP3 to the AC1 and send the measurement information of the WTP3 to the AC2 via the CAPWAP extension tunnel 2, to cause the AC1 and/or AC2 to generate configuration information based on the received measurement information and send the configuration information to the WTP1.

### Second embodiment

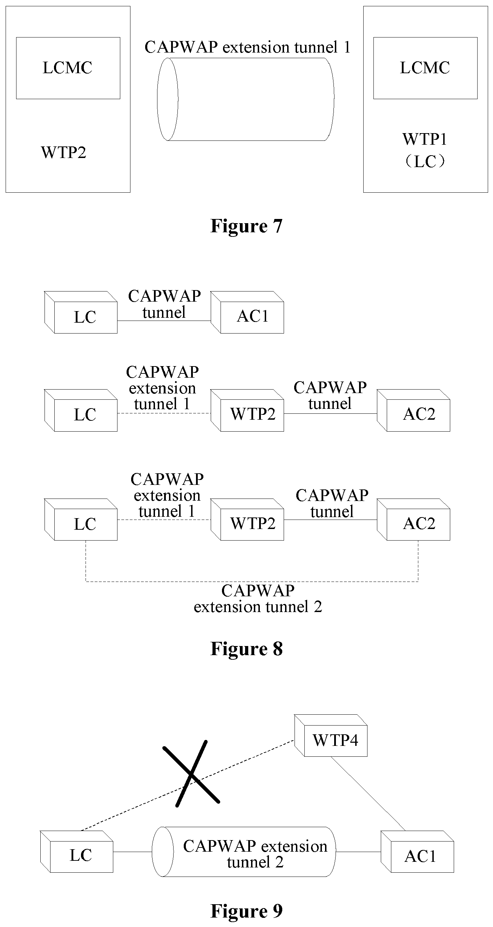

Figure 7 is a schematic diagram of networking of a second embodiment of a control method for a wireless termination point provided by an embodiment of the present invention, which illustrates a method for establishing a first CAPWAP extension tunnel between WTP2 and WTP1. As shown in Figure 7, a local coordinator management entity (LCME) is included in each of the WTP2 (equivalent to the second WTP) and the WTP1 (equivalent to the first WTP). The WTP 1 including the LCME is equivalent to a coordination management terminal for the LCME, and the WTP2 including the LCME is equivalent to a client terminal for the LCME. The WTP1 having the LCME and the WTP2 having the LCME may be connected to each other via CAPWAP extension tunnel 1 (equivalent to the second CAPWAP extension tunnel).

After the LCME is included, the WTP2 has functions for discovering the WTP1, establishing the CAPWAP extension channel 1 between the WTP2 and the WTP1, channel measurement, QoS performance measurement and device error measurement and so on. The WTP1 has functions for responding the discovery for the WTP1 by the WTP2, establishing the CAPWAP extension tunnel 1 between the WTP1 and the WTP2, and managing the WTP2 and so on.

The WTP2 may send measurement information to the WTP1 via the CAPWAP extension tunnel 1 between the WTP2 and the WTP1. The WTP2 may send the measurement information periodically, at a predetermined time, once triggered by an event or in response to a query from the WTP1.

If the WTP1 is to send configuration information to the WTP2, the WTP1 firstly establishes CAPWAP extension tunnel 2 (equivalent to the second CAPWAP extension tunnel) in a datagram transport layer security protocol (Datagram Transport Layer Security, DTLS) connection mode between the WTP1 and an AC controlling the WTP2 (equivalent to the second AC), and then negotiates with the AC controlling the WTP2 about a management right for the WTP2 and a synchronization mode between the AC and the WTP1 via the CAPWAP extension tunnel 2.

### Third embodiment

Figure 8 is a schematic diagram of networking of a third embodiment of a control method for a wireless termination point provided by an embodiment of the present invention, which illustrates a method of WTP1 sending measurement information to an AC and receiving a control instruction sent by the AC. As shown in Figure 8, there are three connection ways between the WTP1 and the AC.

In the first way, the WTP1 is originally managed by AC1 (equivalent to the first AC), hence there is already a CAPWAP tunnel between the WTP1 and the AC1. The WTP1 can extend the original CAPWAP tunnel by sending measurement information to the AC1 via the original CAPWAP tunnel, to cause the original CAPWAP tunnel to have the function of CAPWAP extension tunnel 2.

In the second way, the WTP1 is not managed by AC2 (equivalent to the second AC) originally, hence CAPWAP extension tunnel 2 (equivalent to the second CAPWAP extension tunnel) between the WTP1 and the AC2 is to be established. The LC is directly connected to the AC2 via the CAPWAP extension tunnel 2.

In the third way, there may be no CAPWAP extension tunnel 2 (equivalent to the second CAPWAP extension tunnel) established between the WTP1 and the AC2 (equivalent to the second AC), and the WTP2 (equivalent to the second WTP) under control of the AC2 is used for forwarding. That is, the WTP1 is connected to the WTP2 via the CAPWAP extension tunnel 1 (equivalent to the first CAPWAP extension tunnel), and there is already a CAPWAP tunnel between the WTP2 and the AC2 since the WTP2 belongs to the AC2 originally, and then the WTP2 forwards the measurement information to the AC2 via the CAPWAP tunnel.

The WTP1 needs to send the measurement information received from a WTP not under control of the AC2 to the AC2, and the WTP1 sends the measurement information to the AC2 periodically, in a predetermined time, once triggered by an event or in response to a query from the AC2.

The WTP (equivalent to the second WTP) connected to the WTP1 via the CAPWAP extension tunnel 1 is a WTP managed by the WTP1. The AC controlling the WTP managed by the WTP 1 needs to send a management instruction for the WTP to the WTP1. After receiving the management instruction, the WTP1 determines whether the WTP1 has a management right to the WTP. In a case that the WTP1 has the management right to the WTP, the WTP1 sends the management instruction to the WTP. In a case that the WTP1 does not have the management right to the WTP, the WTP1 does not send the management instruction to the WTP.

### Fourth embodiment

Figure 9 is a schematic diagram of networking of a fourth embodiment of a control method for a wireless termination point provided by an embodiment of the present invention. Compared with the second embodiment, WTP4 in the embodiment (equivalent to the WTP under control of the first AC) has no LCME, hence no CAPWAP extension tunnel can be established between the WTP4 and WTP1. As shown in Figure 9, the WTP4 has no LCME and the WTP4 is in an overlap region managed by the WTP1, hence the AC1 connected to the WTP1 (equivalent to the first AC) is used to assist the WTP1 to manage the WTP4.

The AC1 connected to the WTP1 manages the WTP4 in the following way.

The WTP1 negotiates with the AC1 about a management right to the WTP4. In a case that the WTP1 successfully obtains the management right to the WTP4, the WTP1 sends a management instruction for the WTP4 to the AC1, which in turn sends the management instruction to the WTP4, in this way, the WTP1 sends the management instruction to the WTP4 via the AC1. In addition, after sending the management instruction to the WTP4, the AC1 needs to synchronize with the WTP1 for the state of the WTP4. In a case that the WTP1 does not obtain the management right to the WTP4, the WTP1 may send the management instruction for the WTP4 to the AC1, and the AC1 determines whether to forward the management instruction to the WTP4 according to a preset strategy.

### Fifth embodiment

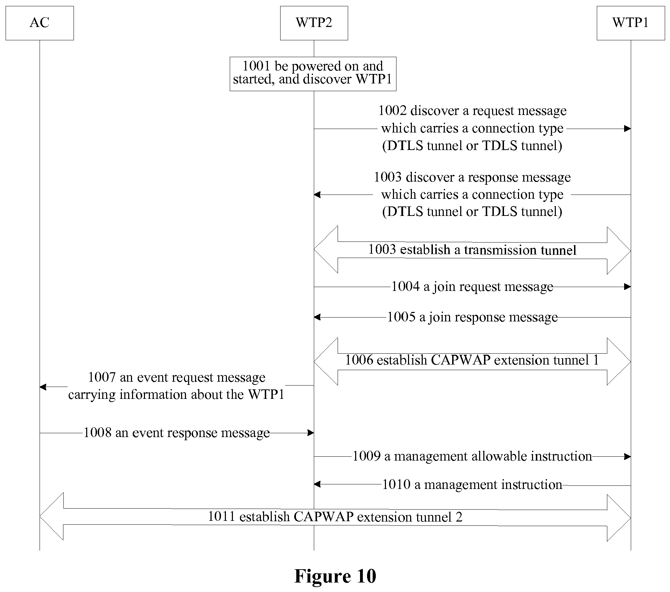

Figure 10 is a schematic diagram of networking of a fifth embodiment of a control method for a wireless termination point provided by an embodiment of the present invention, which illustrates a method for controlling a WTP in an overlap region by WTP1. As shown in Figure 10, the method includes step 1001 to step 1011.

In step 1001, WTP2 (equivalent to the second WTP) is in an idle state after being powered on and started. The WTP2 determines whether the WTP2 supports an LCME function. In a case that the WTP2 supports the LCME function, the WTP2 is changed from the idle state to a discovery state, and then the WTP2 may discover the WTP1. A discovery type is configured in the LCME module in advance. The WTP2 sends scanning packets actively and periodically based on the configured discovery type, and obtains a list of WTP1s around the WTP2 based on the scanning result. Alternatively, the WTP2 monitors and obtains the list of the WTP1s around the WTP2 based on the monitoring result. The list of the WTP1s includes a MAC address of at least one WTP1.

In step 1002, the WTP2 sends a discovery request message to the WTP1 if the WTP2 successfully discovers the WTP1, to request to establish a safe transmission tunnel. A connection type is carried in the discovery request message. The filed of the connection type carried in the discovery request message may occupy 8 bits.

The connection type is a TDLS tunnel (Tunneled Direct Link Setup) or a DTLS tunnel. The connection type of the TDLS tunnel indicates that the WTP initiates a process for establishing a Wi-Fi direct link tunnel between the WTP and the LC. The connection type of the DTLS tunnel indicates that the WTP initiates a process for establishing a DTLS tunnel between the WTP and the WTP1.

In step 1003, after receiving the discovery request message, the WTP1 sends a discovery response message to the WTP2. The discovery response message carries the connection type, to cause the WTP2 to establish a safe transmission tunnel between the WTP2 and the WTP1.

In step 1004, after the transmission tunnel between the WTP2 and the WTP1 is successfully established, the WTP2 sends a join request message to the WTP1 via the transmission tunnel, to request joining the management of the WTP1.

In step 1005, after receiving the join request message sent by the WTP2, the WTP1 sends a join response message to the WTP2 via the transmission tunnel if the WTP1 allows the WTP2 to join, to notify the WTP2 that the WTP2 joins the WTP1 successfully.

In step 1006, in a case that the WTP2 joins the WTP1, CAPWAP extension tunnel 1 (equivalent to the first CAPWAP extension tunnel) is established between the WTP2 and the WTP1, and then the WTP2 and the WTP1 enter an operation sate.

In step 1007, in a case that the WTP2 is a WTP under control of an AC (equivalent to the second WTP under control of the second AC), the WTP2 sends an event request (Event Request) message to the AC connected to the WTP2. The event request message carries information about the WTP1. The information about the WTP1 includes a list of WTPs managed by the WTP1, a connection type of each WTP and a management right of each WTP.

In step 1008, after receiving the event request message, the AC connected to the WTP2 sends an event response message to the WTP2. The event response message carries an instruction indicating whether the WTP1 is allowed to manage the WTP2, an allowed management way, a management condition and an instruction indicating whether the WTP1 is allowed to establish CAPWAP extension tunnel 2 between the WTP1 and the AC. The management condition includes management time, a management right bitmap and a synchronization manner between the WTP1 and the AC. The synchronization manner includes event-triggered synchronization, periodic synchronization, active query and timing synchronization.

In step 1009, after receiving the event response message, the WTP2 sends a management permit instruction to the WTP1 if the event response message carries an instruction indicating that the WTP1 is allowed to manage the WTP2. The management permit instruction carries a management condition, a synchronization manner between the WTP1 and the AC and an instruction indicating whether the WTP1 is allowed to establish CAPWAP extension tunnel 2 between the WTP1 and the AC.

In step 1010, after receiving the management permit instruction sent by the WTP2, the WTP1 sends a management instruction of the WTP1 for the WTP2 obtained based on the management right bitmap, to the WTP2 in a specified time period, to notify the WTP2 of a management right of the WTP1 to the WTP2.

In step 1011, if the AC allows to establish the CAPWAP extension tunnel 2 between the AC and the WTP1, the WTP1 initiates a process for establishing the CAPWAP extension tunnel 2 between the WTP1 and the AC.

If the CAPWAP extension tunnel 2 is established successfully, the AC may obtain measurement information reported by the WTP managed by the WTP1 from the WTP1, obtain configuration information of the WTP managed by the WTP1 based on the measurement information, and then send the configuration information to the WTP1 which in turn sends the configuration information to the WTP managed by the WTP1.

If the CAPWAP extension tunnel 2 is established successfully, the WTP1 may forward, via the AC, the corresponding management instruction to the WTP managed by the AC in the overlap region managed by the WTP1.

Device embodiments for implementing the steps and methods in the above method embodiments are further provided by embodiments of the present invention.

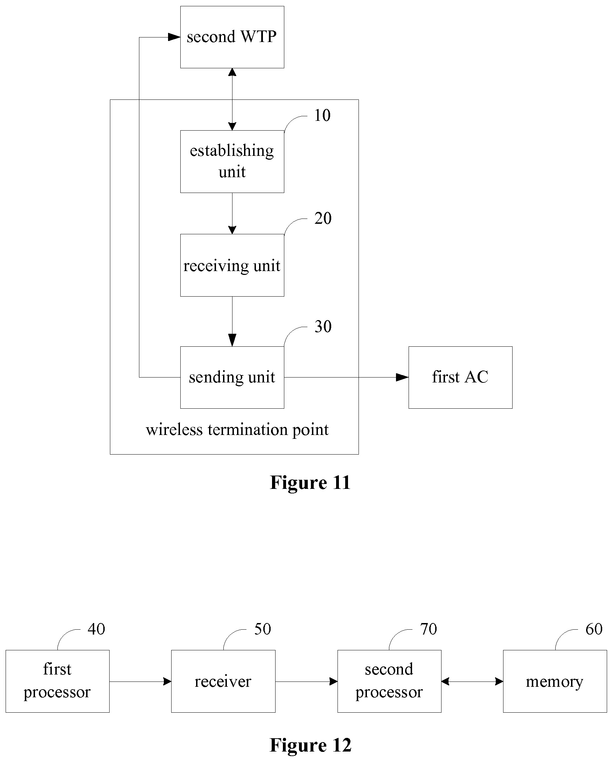

Figure 11 is a functional block diagram of a wireless termination point provided by an embodiment of the present invention. As shown in Figure 11, the wireless termination point includes an establishing unit 10, a receiving unit 20 and a sending unit 30.

The establishing unit 10 is configured to establish a first control and provisioning of wireless access point (CAPWAP) extension tunnel between the wireless termination point and a second WTP.

The receiving unit 20 is configured to receive, via the first CAPWAP extension tunnel, first measurement information sent by the second WTP, where the second WTP is not under control of a first access controller (AC).

The sending unit 30 is configured to send the first measurement information to the first AC, where the first measurement information includes at least channel measurement information, to cause the first AC to generate first configuration information for a WTP under control of the first AC based on second measurement information sent by the WTP under control of the first AC and the first measurement information, and send the first configuration information to the WTP under control of the first AC, to configure a wireless channel of the WTP under control of the first AC, so that the WTP under control of the first AC is not interfered by other WTP.

The wireless termination point is under control of the first AC or is not under control of the first AC.

In a case that the wireless termination point is not under control of the first AC,
the establishing unit 10 is further configured to establish a second CAPWAP extension tunnel between the wireless termination point and the first AC; and
the sending unit 30 is further configured to send the first measurement information to the first AC via the second CAPWAP extension tunnel; or
the establishing unit 10 is further configured to establish a third CAPWAP extension tunnel between the wireless termination point and the WTP under control of the first AC; and
the sending unit 30 is configured to send, via the third CAPWAP extension tunnel, the first measurement information to the WTP under control of the first AC which sends the first measurement information to the first AC.

The second WTP is under control of a second AC or is not under control of any AC.

In the wireless termination point,
the receiving unit 20 is further configured to receive a connection type sent by the second WTP, where the connection type is a tunneled direct link setup (TDLS) tunnel or a datagram transport layer security protocol (DTLS) tunnel;
the sending unit 30 is further configured to send the connection type to the second WTP, to cause the second WTP to establish a transmission tunnel between the second WTP and the wireless termination point based on the connection type;
the receiving unit 20 is further configured to receive, via the transmission tunnel, a join request message sent by the second WTP; and
the sending unit 30 is further configured to send a join response message to the second WTP via the transmission tunnel, to cause the second WTP to establish the first CAPWAP extension tunnel between the second WTP and the wireless termination point.

Figure 12 is a schematic structural diagram of a wireless termination point provided by an embodiment of the present invention. As shown in Figure 12, the wireless termination point includes a first processor 40, a receiver 50, a memory 60 and a second processor 70.

The first processor 40 is configured to establish a first control and provisioning of wireless access point (CAPWAP) extension tunnel between the wireless termination point and a second WTP.

The receiver 50 is configured to receive, via the first CAPWAP extension tunnel, first measurement information sent by the second WTP, where the second WTP is not under control of a first access controller (AC).

The memory 60 is configured to store information including a program routine.

The second processor 70 is coupled to the memory 111 and the receiver 110, and configured to control execution of the program routine, including: sending the first measurement information to the first AC, where the first measurement information includes at least channel measurement information, to cause the first AC to generate first configuration information for a WTP under control of the first AC based on second measurement information sent by the WTP under control of the first AC and the first measurement information, and send the first configuration information to the WTP under control of the first AC, to configure a wireless channel of the WTP under control of the first AC, so that the WTP under control of the first AC is not interfered by other WTP.

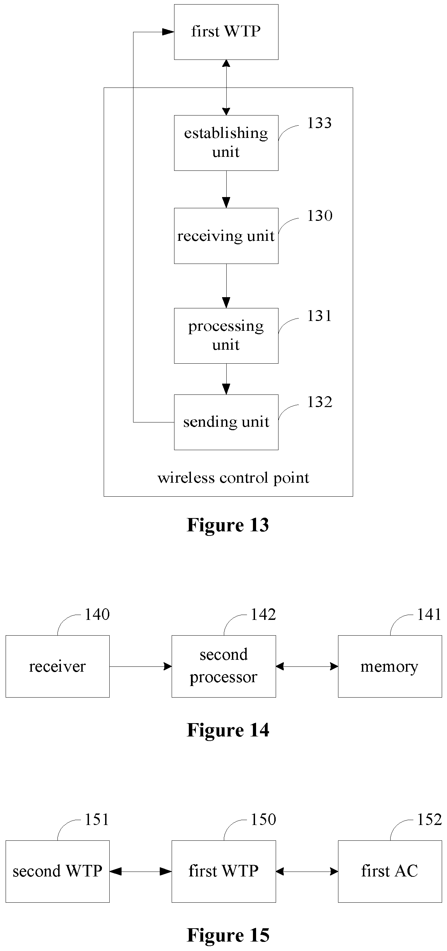

Figure 13 is a functional block diagram of a wireless control point provided by an embodiment of the present invention. As shown in Figure 13, the wireless control point includes a receiving unit 130, a processing unit 131 and a sending unit 132.

The receiving unit 130 is configured to receive first measurement information sent by a first WTP, where the first measurement information is received by the first WTP from a second WTP via a first CAPWAP extension tunnel, the first measurement information includes at least channel measurement information, and the second WTP is not under control of the wireless control point.

The processing unit 131 is configured to generate first configuration information for a WTP under control of the wireless control point based on second measurement information sent by the WTP under control of the wireless control point and the first measurement information.

The sending unit 132 is configured to send the first configuration information to the WTP under control of the wireless control point to configure a wireless channel of the WTP under control of the wireless control point, so that the WTP under control of the wireless control point is not interfered by other WTP.

In the wireless control point,
the processing unit 131 is further configured to generate second configuration information for the second WTP based on the first measurement information and the second measurement information.

The sending unit 132 is further configured to send the second configuration information to the first WTP, to cause the first WTP to send the second configuration information to the second WTP to configure a wireless channel of the second WTP, so that the second WTP is not interfered by other WTP.

The first WTP is under control of the wireless control point or is not under control of the wireless control point.

In a case that the first WTP is not under control of the wireless control point,
the wireless control point further includes an establishing unit 133 configured to establish a second CAPWAP extension tunnel between the wireless control point and the first WTP, and the receiving unit 130 is further configured to receive, via the second CAPWAP extension tunnel, the first measurement information sent by the first WTP; or
the receiving unit 130 is further configured to receive the first measurement information sent by the WTP under control of the wireless control point, where the first measurement information is received by the WTP under control of the wireless control point via a third CAPWAP extension tunnel between the WTP under control of the wireless control point and the first WTP.

In the wireless control point,
the receiving unit 130 is further configured to receive an event request message sent by the WTP under control of the wireless control point, where the event request message carries information about the first WTP;
the sending unit 132 is further configured to send an event response message to the WTP under control of the wireless control point based on the information about the first WTP, to cause the WTP under control of the wireless control point to send a management permit instruction to the first WTP based on the event response message, where the management permit instruction is configured to instruct the first WTP to establish the second CAPWAP extension tunnel between the first WTP and the wireless control point.

Figure 14 is a schematic structural diagram of a wireless control point provided by an embodiment of the present invention. As shown in Figure 14, the wireless control point includes a receiver 140, a memory 141 and a processor 142.

The receiver 140 is configured to receive first measurement information sent by a first WTP, where the first measurement information is received by the first WTP from a second WTP via a first CAPWAP extension tunnel, the first measurement information includes at least channel measurement information, and the second WTP is not under control of the wireless control point.

The memory 141 is configured to store information of a program routine.

The processor 142 is coupled to the memory 140 and the receiver 141 and configured to control execution of the program routine, including: generating first configuration information for a WTP under control of the wireless control point based on second measurement information sent by the WTP under control of the wireless control point and the first measurement information; send the first configuration information to the WTP under control of the wireless control point to configure a wireless channel of the WTP under control of the wireless control point, so that the WTP under control of the wireless control point is not interfered by other WTP.

Figure 15 is a schematic functional diagram of a control system for a wireless termination point provided by an embodiment of the present invention. As shown in Figure 15, the system includes:
a first wireless termination point (WTP) 150, a second WTP 151 and a first access controller (AC) 12.

The first WTP 150 is configured to establish a first control and provisioning of wireless access point CAPWAP extension tunnel between the first WTP 150 and the second WTP 151, and receive, via the first CAPWAP extension tunnel, first measurement information sent by the second WTP 151, where the second WTP 151 is not under control of the first access controller AC 152.

The first WTP 150 is further configured to send the first measurement information to the first AC 152, where the first measurement information includes at least channel measurement information.

The first AC 152 is configured to generate first configuration information for a WTP under control of the first AC based on second measurement information sent by the WTP under control of the first AC and the first measurement information, and send the first configuration information to the WTP under control of the first AC, to configure a wireless channel of the WTP under control of the first AC, so that the WTP under control of the first AC is not interfered by other WTP.

The first WTP 150 is under control of the first AC 152 or is not under control of the first AC 152.

In a case that the first WTP 150 is not under control of the first AC 152, the first WTP 150 sending the first measurement information to the first AC 152 includes:
the first WTP establishing a second CAPWAP extension tunnel between the first WTP and the first AC, and sending, via the second CAPWAP extension tunnel, the first measurement information to the first AC; or
the first WTP establishing a third CAPWAP extension tunnel between the first WTP and the WTP under control of the first AC, and sending, via the third CAPWAP extension tunnel, the first measurement information to the WTP under control of the first AC which sends the first measurement information to the first AC.

The second WTP 151 is under control of the second AC 152 or is not under control of any AC.

The first wireless termination point WTP 150 establishing a first control and provisioning of wireless access point CAPWAP extension tunnel between the first WTP 150 and the second WTP 151 includes:
the first WTP receiving a connection type sent by the second WTP, where the connection type is a tunneled direct link setup tunneled direct link setup TDLS tunnel or a datagram transport layer security protocol DTLS tunnel;
the first WTP sending the connection type to the second WTP, to cause the second WTP to establish a transmission tunnel between the second WTP and the first WTP based on the connection type;
the first WTP receiving, via the transmission tunnel, a join request message sent by the second WTP; and
the first WTP sending, via the transmission tunnel, a join response message to the second WTP, to cause the second WTP to establish the first CAPWAP extension tunnel between the second WTP and the first WTP.

The first AC 152 is further configured to generate second configuration information for the second WTP 151 based on the first measurement information and the second measurement information, and send the second configuration information to the first WTP 150, to cause the first WTP 150 to send the second configuration information to the second WTP 151 to configure a wireless channel of the second WTP 151, so that the second WTP 151 is not interfered by other WTP.

The first AC 152 establishing the second CAPWAP extension tunnel between the first AC 152 and the first WTP 150 includes:
the first AC receiving an event request message sent by the WTP under control of the first AC, where the event request message carries information about the first WTP; and
the first AC sending an event response message to the WTP under control of the first AC based on the information about the first WTP, to cause the WTP under control of the first AC to send a management permit instruction to the first WTP based on the event response message, where the management permit instruction is configured to instruct the first WTP to establish the second CAPWAP extension tunnel between the first WTP and the first AC.

With the technical solutions according to the present invention, the first WTP acts as a local coordinator device, which obtains corresponding measurement information from other WTPs and reports the measurement information to the AC, such that the AC may generate configuration information for the WTP under control of the AC and configuration information for the WTP not under control of the AC based on measurement information of the WTP under control of the AC and measurement information of the WTP not under control of the AC, and the first WTP configures a wireless frequency band of the WTP managed by the first WTP based on the configuration information and the first WTP can assist the AC to obtain a management right for WTPs in a large range, and thereby solving the coordination problem between multiple types of WTPs, reducing interference between the WTPs and avoiding interference between the WTPs in an OBSS region. In addition, the CAPWAWP protocol is extended, thereby improving functions of CAPWAP discovery, tunnel establishing and WTP management.

The above are preferred embodiments of the present invention, which are not intended to limit the present invention.

## Claims

1. A control method for a first wireless termination point, WTP, comprising:
establishing (401), by the first WTP, a first control and provisioning of wireless access point, CAPWAP, extension tunnel between the first WTP and a second WTP;
receiving (402), by the first WTP via the first CAPWAP extension tunnel, first measurement information sent by the second WTP, wherein the second WTP is not under control of a first access controller, AC; and
sending (403), by the first WTP, the first measurement information to the first AC, wherein the first measurement information comprises at least channel measurement information, to cause the first AC to generate first configuration information for a WTP under control of the first AC based on second measurement information sent by the WTP under control of the first AC and the first measurement information, and send the first configuration information to the WTP under control of the first AC, to configure a wireless channel of the WTP under control of the first AC, so that the WTP under control of the first AC avoids interference from other WTP.

2. The method according to claim 1, wherein
the first WTP is under control of the first AC or is not under control of the first AC, and
in a case that the first WTP is not under control of the first AC, sending (403), by the first WTP, the first measurement information to the first AC comprises:
establishing, by the first WTP, a second CAPWAP extension tunnel between the first WTP and the first AC; and sending, by the first WTP via the second CAPWAP extension tunnel, the first measurement information to the first AC; or
establishing, by the first WTP, a third CAPWAP extension tunnel between the first WTP and a WTP under control of the first AC; and sending, by the first WTP via the third CAPWAP extension tunnel, the first measurement information to the WTP under control of the first AC which sends the first measurement information to the first AC.

3. The method according to claim 1, wherein the second WTP is under control of a second AC or is not under control of any AC.

4. The method according to claim 1, wherein establishing (401), by the first wireless termination point, WTP, the first control and provisioning of wireless access point, CAPWAP, extension tunnel between the first WTP and the second WTP comprises:
receiving, by the first WTP, a connection type sent by the second WTP, wherein the connection type is a tunneled direct link setup, TDLS, tunnel or a datagram transport layer security protocol, DTLS, tunnel;
sending, by the first WTP, the connection type to the second WTP, to cause the second WTP to establish a transmission tunnel between the second WTP and the first WTP based on the connection type; and receiving, by the first WTP via the transmission tunnel, a join request message sent by the second WTP; and
sending, by the first WTP via the transmission tunnel, a join response message to the second WTP, to cause the second WTP to establish the first CAPWAP extension tunnel between the second WTP and the first WTP.

5. A control method for a first access controller, AC, comprising:
receiving (501), by the first AC, first measurement information sent by a first WTP, wherein the first measurement information is received by the first WTP from a second WTP via a first CAPWAP extension tunnel, the first measurement information comprises at least channel measurement information, and the second WTP is not under control of the first AC;
generating (502), by the first AC, first configuration information for a WTP under control of the first AC based on second measurement information sent by the WTP under control of the first AC and the first measurement information; and
sending (503), by the first AC, the first configuration information to the WTP under control of the first AC to configure a wireless channel of the WTP under control of the first AC, so that the WTP under control of the first AC avoids interference from other WTP.

6. The method according to claim 5, further comprising:
generating, by the first AC, second configuration information for the second WTP based on the first measurement information and the second measurement information; and
sending, by the first AC, the second configuration information to the first WTP, to cause the first WTP to send the second configuration information to the second WTP, to configure a wireless channel of the second WTP, so that the second WTP avoids interference from other WTP.

7. The method according to claim 5, wherein the first WTP is under control of the first AC or is not under control of the first AC, and
in a case that the first WTP is not under control of the first AC, receiving (501), by the first AC, the first measurement information sent by the first WTP comprises:
establishing, by the first AC, a second CAPWAP extension tunnel between the first AC and the first WTP; and receiving, by the first AC via the second CAPWAP extension tunnel, the first measurement information sent by the first WTP; or
receiving, by the first AC, the first measurement information sent by a WTP under control of the first AC, wherein the first measurement information is received by the WTP under control of the first AC via a third CAPWAP extension tunnel between the WTP under control of the first AC and the first WTP.

8. The method according to claim 7, wherein establishing, by the first AC, the second CAPWAP extension tunnel between the first AC and the first WTP comprises:
receiving, by the first AC, an event request message sent by the WTP under control of the first AC, wherein the event request message carries information about the first WTP; and
sending, by the first AC, an event response message to the WTP under control of the first AC based on the information about the first WTP, to cause the WTP under control of the first AC to send a management permit instruction to the first WTP based on the event response message, wherein the management permit instruction is configured to instruct the first WTP to establish the second CAPWAP extension tunnel between the first WTP and the first AC.

9. A wireless termination point, comprising:
an establishing unit (10), configured to establish a first control and provisioning of wireless access point, CAPWAP, extension tunnel between the wireless termination point and a second WTP;
a receiving unit (20), configured to receive, via the first CAPWAP extension tunnel, first measurement information sent by the second WTP, wherein the second WTP is not under control of a first access controller, AC; and
a sending unit (30), configured to send the first measurement information to the first AC, wherein the first measurement information comprises at least channel measurement information, to cause the first AC to generate first configuration information for a WTP under control of the first AC based on second measurement information sent by the WTP under control of the first AC and the first measurement information, and send the first configuration information to the WTP under control of the first AC, to configure a wireless channel of the WTP under control of the first AC, so that the WTP under control of the first AC avoids interference from other WTP.

10. The wireless termination point according to claim 9, wherein the wireless termination point is under control of the first AC or is not under control of the first AC, and
in a case that the wireless termination point is not under control of the first AC,
the establishing unit (10) is further configured to establish a second CAPWAP extension tunnel between the wireless termination point and the first AC; and
the sending unit (30) is configured to send, via the second CAPWAP extension tunnel, the first measurement information to the first AC; or
the establishing unit (10) is further configured to establish a third CAPWAP extension tunnel between the wireless termination point and a WTP under control of the first AC; and
the sending unit (30) is configured to send, via the third CAPWAP extension tunnel, the first measurement information to the WTP under control of the first AC which sends the first measurement information to the first AC.

11. The wireless termination point according to claim 9, wherein the second WTP is under control of a second AC or is not under control of any AC.

12. The wireless termination point according to claim 9, wherein
the receiving unit (20) is further configured to receive a connection type sent by the second WTP, wherein the connection type is a tunneled direct link setup, TDLS, tunnel or a datagram transport layer security protocol, DTLS, tunnel;
the sending unit (30) is further configured to send the connection type to the second WTP, to cause the second WTP to establish a transmission tunnel between the second WTP and the wireless termination point based on the connection type;
the receiving unit (20) is further configured to receive, via the transmission tunnel, a join request message sent by the second WTP; and
the sending unit (30) is further configured to send, via the transmission tunnel, a join response message to the second WTP, to cause the second WTP to establish the first CAPWAP extension tunnel between the second WTP and the wireless termination point.

13. An access controller for controlling wireless termination points, comprising:
a receiving unit (130), configured to receive first measurement information sent by a first WTP, wherein the first measurement information is received by the first WTP from a second WTP via a first CAPWAP extension tunnel, the first measurement information comprises at least channel measurement information, and the second WTP is not under control of the wireless control point;
a processing unit (131), configured to generate first configuration information for a WTP under control of the wireless control point based on second measurement information sent by the WTP under control of the wireless control point and the first measurement information; and
a sending unit (132), configured to send the first configuration information to the WTP under control of the wireless control point to configure a wireless channel of the WTP under control of the wireless control point, so that the WTP under control of the wireless control point avoids interference from other WTP.

14. The access controller according claim 13, wherein
the processing unit (131) is further configured to generate second configuration information for the second WTP based on the first measurement information and the second measurement information; and
the sending unit (132) is further configured to send the second configuration information to the first WTP, to cause the first WTP to send the second configuration information to the second WTP, to configure a wireless channel of the second WTP, so that the second WTP avoids interference from other WTP.

15. The access controller according to claim 13, wherein the first WTP is under control of the wireless control point or is not under control of the wireless control point, and
in a case that the first WTP is not under control of the wireless control point,
the wireless control point further comprises an establishing unit (133) configured to establish a second CAPWAP extension tunnel between the wireless control point and the first WTP; and the receiving unit (130) is further configured to receive, via the second CAPWAP extension tunnel, the first measurement information sent by the first WTP; or
the receiving unit (130) is further configured to receive the first measurement information sent by a WTP under control of the wireless control point, wherein the first measurement information is received by the WTP under control of the wireless control point via a third CAPWAP extension tunnel between the WTP under control of the wireless control point and the first WTP.

16. The access controller according to claim 15, wherein
the receiving unit (130) is further configured to receive an event request message sent by the WTP under control of the wireless control point, wherein the event request message carries information about the first WTP; and
the sending unit (132) is further configured to send an event response message to the WTP under control of the wireless control point based on the information about the first WTP, to cause the WTP under control of the wireless control point to send a management permit instruction to the first WTP based on the event response message, wherein the management permit instruction is configured to instruct the first WTP to establish a second CAPWAP extension tunnel between the first WTP and the wireless control point.

## Patentansprüche

1. Steuerverfahren für eine erste Drahtlos-Endstelle, WTP, umfassend:
Aufbauen (401) eines ersten "Control and Provisioning of Wireless Access Point", CAPWAP, -Erweiterungstunnels zwischen der ersten WTP und einer zweiten WTP;
Empfangen (402) erster Messinformationen, die von der zweiten WTP gesendet wurden, durch die erste WTP über den ersten CAPWAP-Erweiterungstunnel, wobei die zweite WTP nicht unter Steuerung einer ersten Zugangssteuerung, AC, ist; und
Senden (403) der ersten Messinformationen an die erste AC durch die erste WTP, wobei die ersten Messinformationen mindestens Kanalmessinformationen umfassen, um herbeizuführen, dass die erste AC erste Konfigurationsinformationen für eine WTP unter Steuerung der ersten AC basierend auf zweiten Messinformationen, die durch die WTP unter Steuerung der ersten AC gesendet wurden, und den ersten Messinformationen generiert, und die ersten Konfigurationsinformationen an die WTP unter Steuerung der ersten AC sendet, um einen Drahtloskanal der WTP unter Steuerung der ersten AC zu generieren, damit die WTP unter Steuerung der ersten AC Interferenz mit der anderen WTP vermeidet.

2. Verfahren nach Anspruch 1, wobei
die erste WTP unter Steuerung der ersten AC oder nicht unter Steuerung der ersten AC ist, und
falls die erste WTP nicht unter Steuerung der ersten AC ist, das Senden (403) der ersten Messinformationen an die erste AC durch die erste WTP umfasst:
Aufbauen eines zweiten CAPWAP-Erweiterungstunnels zwischen der ersten WTP und der ersten AC durch die erste WTP; und Senden der ersten Messinformationen an die erste AC über den zweiten CAPWAP-Erweiterungstunnel durch die erste WTP; oder
Aufbauen eines dritten CAPWAP-Erweiterungstunnels zwischen der ersten WTP und einer WTP unter Steuerung der ersten AC durch die erste WTP; und Senden der ersten Messinformationen durch die erste WTP über den dritten CAPWAP-Erweiterungstunnel an die WTP unter Steuerung der ersten AC, welche die ersten Messinformationen an die erste AC sendet.

3. Verfahren nach Anspruch 1, wobei die zweite WTP unter Steuerung einer zweiten AC oder nicht unter Steuerung irgendeiner AC ist.

4. Verfahren nach Anspruch 1, wobei Aufbauen (401) des ersten "Control And Provisioning of Wireless Access Point", CAPWAP-Erweiterungstunnels durch die erste Drahtlos-Endstelle, WTP, zwischen der ersten WTP und der zweiten WTP umfasst:
Empfangen eines durch die zweite WTP gesendeten Verbindungstyps durch die erste WTP, wobei der Verbindungstyp ein "Tunneled Direct Link Setup", TDLS-Tunnel oder ein "Datagram Transport Layer Security Protocol", DTLS-Tunnel ist;
Senden des Verbindungstyps an die zweite WTP durch die erste WTP, um herbeizuführen, dass die zweite WTP einen Übertragungstunnel zwischen der zweiten WTP und der ersten WTP basierend auf dem Verbindungstyp aufbaut; und
Empfangen einer "Join"-Anforderungsnachricht, die durch die zweite WTP gesendet wurde, durch die erste WTP über den Übertragungstunnel; und
Senden einer "Join"-Antwortnachricht an die zweite WTP durch die erste WTP über den Übertragungstunnel, um herbeizuführen, dass die zweite WTP den ersten CAPWAP-Erweiterungstunnel zwischen der zweiten WTP und der ersten WTP aufbaut.

5. Steuerverfahren für eine erste Zugangssteuerung, AC, umfassend:
Empfangen (501) von ersten Messinformationen, die von einer ersten WTP gesendet wurden, durch die erste AC, wobei die ersten Messinformationen durch die erste WTP von einer zweiten WTP über einen ersten CAPWAP-Erweiterungstunnel empfangen wurden, wobei die ersten Messinformationen mindestens Kanalmessinformationen umfassen, und die zweite WTP nicht unter Steuerung der ersten AC ist;
Generieren (502) von ersten Konfigurationsinformationen für eine WTP unter Steuerung der ersten AC basierend auf zweiten Messinformationen, die durch die WTP unter Steuerung der ersten AC gesendet wurden, und den ersten Messinformationen durch die erste AC; und
Senden (503) der ersten Konfigurationsinformationen an die WTP unter Steuerung der ersten AC durch die erste AC, um einen Drahtloskanal der WTP unter Steuerung der ersten AC zu konfigurieren, damit die WTP unter Steuerung der ersten AC Interferenz von der anderen WTP vermeidet.

6. Verfahren nach Anspruch 5, ferner umfassend:
Generieren von zweiten Konfigurationsinformationen für die zweite WTP basierend auf den ersten Messinformationen und den zweiten Messinformationen durch die erste AC; und
Senden der zweiten Konfigurationsinformationen an die erste WTP durch die erste AC, um herbeizuführen, dass die erste WTP die zweiten Konfigurationsinformationen an die zweite WTP sendet, um einen Drahtloskanal der zweiten WTP zu konfigurieren, so dass die zweite WTP Interferenz von der anderen WTP vermeidet.

7. Verfahren nach Anspruch 5, wobei die erste WTP unter Steuerung der ersten AC oder nicht unter Steuerung der ersten AC ist, und
falls die erste WTP nicht unter Steuerung der ersten AC ist, das Empfangen (501) der ersten Messinformationen, die von der ersten WTP gesendet wurden, durch die erste AC umfasst:
Aufbauen eines zweiten CAPWAP-Erweiterungstunnels zwischen der ersten AC und der ersten WTP durch die erste AC; und Empfangen der ersten Messinformationen, die von der ersten WTP gesendet wurden, durch die erste AC über den zweiten CAPWAP-Erweiterungstunnel; oder
Empfangen der ersten Messinformationen, die von einer WTP unter Steuerung der ersten AC gesendet wurden, durch die erste AC, wobei die ersten Messinformationen durch die WTP unter Steuerung der ersten AC über einen dritten CAPWAP-Erweiterungstunnel zwischen der WTP unter Steuerung der ersten AC und der ersten WTP empfangen werden.

8. Verfahren nach Anspruch 7, wobei Aufbauen des zweiten CAPWAP-Erweiterungstunnels zwischen der ersten AC und der ersten WTP durch die erste AC umfasst:
Empfangen einer Event-Anforderungsnachricht, die von der WTP unter Steuerung der ersten AC gesendet wurde, durch die erste AC, wobei die Event-Anforderungsnachricht Informationen betreffs der ersten WTP trägt; und
Senden einer Event-Antwortnachricht an die WTP unter Steuerung der ersten AC basierend auf den Informationen betreffs der ersten WTP durch die erste AC, um herbeizuführen, dass die WTP unter Steuerung der ersten AC eine Management-Genehmigungsanweisung an die erste WTP sendet, die auf der Event-Antwortnachricht basiert, wobei die Management-Genehmigungsanweisung konfiguriert ist, um die erste WTP zu instruieren, den zweiten CAPWAP-Erweiterungstunnel zwischen der ersten WTP und der ersten AC aufzubauen.

9. Drahtlos-Endstelle, umfassend:
eine Aufbaueinheit (10), die konfiguriert ist, um einen ersten "Control And Provisioning of Wireless Access Point", CAPWAP-Erweiterungstunnel zwischen der Drahtlos-Endstelle und einer zweiten WTP aufzubauen;
eine Empfangseinheit (20), die konfiguriert ist, um über den ersten CAPWAP-Erweiterungstunnel erste Messinformationen zu empfangen, die durch die zweite WTP gesendet wurden, wobei die zweite WTP nicht unter Steuerung einer ersten Zugangssteuerung, AC, ist; und
eine Sendeeinheit (30), die konfiguriert ist, um die ersten Messinformationen an die erste AC zu senden, wobei die ersten Messinformationen mindestens Kanalmessinformationen umfassen, um herbeizuführen, dass die erste AC erste Konfigurationsinformationen für eine WTP unter Steuerung der ersten AC basierend auf zweiten Messinformationen, die durch die WTP unter Steuerung der ersten AC gesendet wurden, und den ersten Messinformationen generiert, und die ersten Konfigurationsinformationen an die WTP unter Steuerung der ersten AC sendet, um einen Drahtloskanal der WTP unter Steuerung der ersten AC zu generieren, damit die WTP unter Steuerung der ersten AC Interferenz mit der anderen WTP vermeidet.

10. Drahtlos-Endstelle nach Anspruch 9, wobei die Drahtlos-Endstelle unter Steuerung der ersten AC oder nicht unter Steuerung der ersten AC ist, und
falls die Drahtlos-Endstelle nicht unter Steuerung der ersten AC ist,
die Aufbaueinheit (10) ferner konfiguriert ist, um einen zweiten CAPWAP-Erweiterungstunnel zwischen der Drahtlos-Endstelle und der ersten AC aufzubauen; und
die Sendeeinheit (30) konfiguriert ist, um über den zweiten CAPWAP-Erweiterungstunnel die ersten Messinformationen an die erste AC zu senden; oder
die Aufbaueinheit (10) ferner konfiguriert ist, um einen dritten CAPWAP-Erweiterungstunnel zwischen der Drahtlos-Endstelle und einer WTP unter Steuerung der ersten AC aufzubauen; und
die Sendeeinheit (30) konfiguriert ist, um über den dritten CAPWAP-Erweiterungstunnel die ersten Messinformationen an die WTP unter Steuerung der ersten AC zu senden, welche die ersten Messinformationen an die erste AC sendet.

11. Drahtlos-Endstelle nach Anspruch 9, wobei die zweite WTP unter Steuerung einer zweiten AC oder nicht unter Steuerung irgendeiner AC ist.

12. Drahtlos-Endstelle nach Anspruch 9, wobei
die Empfangseinheit (20) ferner konfiguriert ist, um einen durch die zweite WTP gesendeten Verbindungstyp zu empfangen, wobei der Verbindungstyp ein "Tunneled Direct Link Setup", TDLS-Tunnel oder ein "Datagram Transport Layer Security Protocol", DTLS-Tunnel ist;
die Sendeeinheit (30) ferner konfiguriert ist, um den Verbindungstyp an die zweite WTP zu senden, um herbeizuführen, dass die zweite WTP einen Übertragungstunnel zwischen der zweiten WTP und der Drahtlos-Endstelle basierend auf dem Verbindungstyp aufbaut;
die Empfangseinheit (20) ferner konfiguriert ist, um über den Übertragungstunnel eine "Join"-Anforderungsnachricht zu empfangen, die von der zweiten WTP gesendet wurde; und
die Sendeeinheit (30) ferner konfiguriert ist, um über den Übertragungstunnel eine "Join"-Antwortnachricht an die zweite WTP zu senden, um herbeizuführen, dass die zweite WTP den ersten CAPWAP-Erweiterungstunnel zwischen der zweiten WTP und der Drahtlos-Endstelle aufbaut.

13. Zugangssteuerung zur Steuerung von Drahtlos-Endstellen, umfassend:
eine Empfangseinheit (130), die konfiguriert ist, um erste Messinformationen zu empfangen, die von einer ersten WTP gesendet wurden, wobei die ersten Messinformationen durch die erste WTP von einer zweiten WTP über einen ersten CAPWAP-Erweiterungstunnel empfangen werden, wobei die ersten Messinformationen mindestens Kanalmessinformationen umfassen, und die zweite WTP nicht unter Steuerung des Drahtlos-Steuerungspunkts ist;
eine Verarbeitungseinheit (131), die konfiguriert ist, um erste Konfigurationsinformationen für eine WTP unter Steuerung des Drahtlos-Steuerungspunkts basierend auf zweiten Messinformationen, die von der WTP unter Steuerung des Drahtlos-Steuerungspunkts gesendet wurden, und den ersten Messinfomationen zu generieren; und
eine Sendeeinheit (132), die konfiguriert ist, um die ersten Konfigurationsinformationen an die WTP unter Steuerung des Drahtlos-Steuerungspunkts zu senden, um einen Drahtloskanal der WTP unter Steuerung des Drahtlos-Steuerungspunkts zu konfigurieren, damit die WTP unter Steuerung des Drahtlos-Steuerungspunkts Interferenz von der anderen WTP vermeidet.

14. Zugangssteuerung nach Anspruch 13, wobei
die Verarbeitungseinheit (131) ferner konfiguriert ist, um zweite Konfigurationsinformationen für die zweite WTP basierend auf den ersten Messinformationen und den zweiten Messinformationen zu generieren; und
die Sendeeinheit (132) ferner konfiguriert ist, um die zweiten Konfigurationsinformationen an die erste WTP zu senden, um herbeizuführen, dass die erste WTP
die zweiten Konfigurationsinformationen an die zweite WTP sendet, um einen Drahtloskanal der zweiten WTP zu konfigurieren, damit die zweite WTP Interferenz von der anderen WTP vermeidet.

15. Zugangssteuerung nach Anspruch 13, wobei die erste WTP unter Steuerung des Drahtlos-Zugangspunkts ist oder nicht unter Steuerung des Drahtlos-Zugangspunkts ist, und
falls die erste WTP nicht unter Steuerung des Drahtlos-Zugangspunkts ist,
der Drahtlos-Zugangspunkt ferner eine Aufbaueinheit (133) umfasst, die konfiguriert ist, um einen zweiten CAPWAP-Erweiterungstunnel zwischen dem Drahtlos-Steuerungspunkt und der ersten WTP aufzubauen; und die Empfangseinheit (130) ferner konfiguriert ist, um über den zweiten CAPWAP-Erweiterungstunnel die ersten Messinformationen zu empfangen, die von der ersten WTP gesendet wurden; oder
die Empfangseinheit (130) ferner konfiguriert ist, um die ersten Messinformationen zu empfangen, die von einer WTP unter Steuerung des Drahtlos-Zugangspunkts gesendet wurden, wobei die ersten Messinformationen durch die WTP unter Steuerung des Drahtlos-Zugangspunkts über einen dritten CAPWAP-Erweiterungstunnel zwischen der WTP unter Steuerung des Drahtlos-Zugangspunkts und der ersten WTP empfangen werden.

16. Zugangssteuerung nach Anspruch 15, wobei
die Empfangseinheit (130) ferner konfiguriert ist, um eine Event-Anforderungsnachricht zu empfangen, die durch die WTP unter Steuerung des Drahtlos-Zugangspunkts gesendet wurde, wobei die Event-Anforderungsnachricht Informationen betreffs der ersten WTP trägt; und
die Sendeeinheit (132) ferner konfiguriert ist, um eine Event-Antwortnachricht an die WTP unter Steuerung des Drahtlos-Zugangspunkts basierend auf den Informationen betreffs der ersten WTP zu senden, um herbeizuführen, dass die WTP unter Steuerung des Drahtlos-Steuerungspunkts eine Management-Genehmigungsanweisung an die erste WTP sendet, die auf der Event-Antwortnachricht basiert, wobei die Management-Genehmigungsanweisung konfiguriert ist, um die erste WTP zu instruieren, einen zweiten CAPWAP-Erweiterungstunnel zwischen der ersten WTP und dem Drahtlos-Steuerungspunkt aufzubauen.

## Revendications

1. Procédé de commande d'un premier point de terminaison sans fil, WTP, comprenant :
l'établissement (401), par le premier WTP, d'un première commande et d'un premier approvisionnement d'un tunnel d'extension de point d'accès sans fil, CAPWAP, entre le premier WTP et un second WTP ;
la réception (402), par le premier WTP par l'intermédiaire du premier tunnel d'extension CAPWAP, de premières informations de mesure envoyées par le second WTP, dans lequel le second WTP n'est pas sous la commande d'un premier contrôleur d'accès, AC ; et
l'envoi (403), par le premier WTP, des premières informations de mesure au premier AC, dans lequel les premières informations de mesure comprennent au moins des informations de mesure de canal, pour amener le premier AC à générer des premières informations de configuration d'un WTP sous la commande du premier AC en fonction de secondes informations de mesure envoyées par le WTP sous la commande du premier AC et des premières informations de mesure, et à envoyer les premières informations de configuration au WTP sous la commande du premier AC, pour configurer un canal sans fil du WTP sous la commande du premier AC, de telle sorte que le WTP sous la commande du premier AC évite un brouillage causé par un autre WTP.

2. Procédé selon la revendication 1, dans lequel
le premier WTP est sous la commande du premier AC ou n'est pas sous la commande du premier AC, et
dans le cas où le premier WTP n'est pas sous la commande du premier AC, l'envoi (403), par le premier WTP, des premières informations de mesure au premier AC comprend :
l'établissement, par le premier WTP, d'un deuxième tunnel d'extension CAPWAP entre le premier WTP et le premier AC ; et l'envoi, par le premier WTP par l'intermédiaire du deuxième tunnel d'extension CAPWAP, des premières informations de mesure au premier AC ; ou
l'établissement, par le premier WTP, d'un troisième tunnel d'extension CAPWAP entre le premier WTP et un WTP sous la commande du premier AC ; et l'envoi, par le premier WTP par l'intermédiaire du troisième tunnel d'extension CAPWAP, des premières informations de mesure au WTP sous la commande du premier AC qui envoie les premières informations de mesure au premier AC.

3. Procédé selon la revendication 1, dans lequel le second WTP est sous la commande d'un second AC or n'est pas sous la commande d'un AC.

4. Procédé selon la revendication 1, dans lequel l'établissement (401), par le premier point de terminaison sans fil, WTP, de la première commande et du premier approvisionnement d'un tunnel d'extension de point d'accès sans fil, CAPWAP, entre le premier WTP et le second WTP comprend :
la réception, par le premier WTP, d'un type de connexion envoyé par le second WTP, dans lequel le type de connexion est un tunnel d'établissement de liaison directe tunnellisée, TDLS, ou un tunnel selon le protocole de sécurité de couche de transport de datagrammes, DTLS ;
l'envoi, par le premier WTP, du type de connexion au second WTP, pour amener le second WTP à établir un tunnel de transmission entre le second WTP et le premier WTP en fonction du type de connexion ; et la réception, par le premier WTP par l'intermédiaire du tunnel de transmission, d'un message de demande de rattachement envoyé par le second WTP ; et
l'envoi, par le premier WTP par l'intermédiaire du tunnel de transmission, d'un message de réponse de rattachement au second WTP, pour amener le second WTP à établit le premier tunnel d'extension CAPWAP entre le second WTP et le premier WTP.

5. Procédé de commande d'un premier contrôleur d'accès, AC, comprenant :
la réception (501), par le premier AC, de premières informations de mesure envoyées par un premier WTP, dans lequel les premières informations de mesure sont reçues par le premier WTP depuis un second WTP par l'intermédiaire d'un premier tunnel d'extension CAPWAP, les premières informations de mesure comprennent au moins des informations de mesure de canal, et le second WTP n'est pas sous la commande du premier AC ;
la génération (502), par le premier AC, de premières informations de configuration d'un WTP sous la commande du premier AC en fonction de secondes informations de mesure envoyées par le WTP sous la commande du premier AC et des premières informations de mesure ; et
l'envoi (503), par le premier AC, des premières informations de configuration au WTP sous la commande du premier AC pour configurer un canal sans fil du WTP sous la commande du premier AC, de telle sorte que le WTP sous la commande du premier AC évite un brouillage causé par un autre WTP.

6. Procédé selon la revendication 5, comprenant en outre :
la génération, par le premier AC, de secondes informations de configuration pour le second WTP en fonction des premières informations de mesure et des secondes informations de mesure ; et
l'envoi, par le premier AC, des secondes informations de configuration au premier WTP, pour amener le premier WTP à envoyer les secondes informations de configuration au second WTP, afin de configurer un canal sans fil du second WTP, de telle sorte que le second WTP évite un brouillage causé par un autre WTP.

7. Procédé selon la revendication 5, dans lequel le premier WTP est sous la commande du premier AC ou n'est pas sous la commande du premier AC, et
dans le cas où le premier WTP n'est pas sous la commande du premier AC, la réception (501), par le premier AC, des premières informations de mesure envoyées par le premier WTP comprend :
l'établissement, par le premier AC, d'un deuxième tunnel d'extension CAPWAP entre le premier AC et le premier WTP ; et la réception, par le premier AC par l'intermédiaire du deuxième tunnel d'extension CAPWAP, des premières informations de mesure envoyées par le premier WTP ; ou
la réception, par le premier AC, des premières informations de mesure envoyées par un WTP sous la commande du premier AC, dans lequel les premières informations de mesure sont reçues par le WTP sous la commande du premier AC par l'intermédiaire d'un troisième tunnel d'extension CAPWAP entre le WTP sous la commande du premier AC et le premier WTP.

8. Procédé selon la revendication 7, dans lequel l'établissement, par le premier AC, du deuxième tunnel d'extension CAPWAP entre le premier AC et le premier WTP comprend :
la réception, par le premier AC, d'un message de demande d'événement envoyé par le WTP sous la commande du premier AC, dans lequel le message de demande d'événement comporte des informations au sujet du premier WTP ; et
l'envoi, par le premier AC, d'un message de réponse d'événement au WTP sous la commande du premier AC en fonction des informations au sujet du premier WTP, pour amener le WTP sous la commande du premier AC à envoyer une instruction d'autorisation de gestion au premier WTP en fonction du message de réponse d'événement,
dans lequel l'instruction d'autorisation de gestion est configurée pour ordonner au premier WTP d'établir le deuxième tunnel d'extension CAPWAP entre le premier WTP et le premier AC.

9. Point de terminaison sans fil, comprenant :
une unité d'établissement (10), configurée pour établir une première commande et un premier approvisionnement d'un tunnel d'extension de point d'accès sans fil, CAPWAP, entre le point de terminaison sans fil et un second WTP ;
une unité de réception (20), configurée pour recevoir, par l'intermédiaire du premier tunnel d'extension CAPWAP, des premières informations de mesure envoyées par le second WTP, dans lequel le second WTP n'est pas sous la commande d'un premier contrôleur d'accès, AC ; et
une unité d'envoi (30), configurée pour envoyer les premières informations de mesure au premier AC, dans lequel les premières informations de mesure comprennent au moins des informations de mesure de canal, pour amener le premier AC à générer des premières informations de configuration d'un WTP sous la commande du premier AC en fonction de secondes informations de mesure envoyées par le WTP sous la commande du premier AC et des premières informations de mesure, et envoyer les premières informations de configuration au WTP sous la commande du premier AC, pour configurer un canal sans fil du WTP sous la commande du premier AC, de telle sorte que le WTP sous la commande du premier AC évite un brouillage causé par un autre WTP.

10. Point de terminaison sans fil selon la revendication 9, dans lequel le point de terminaison sans fil est sous la commande du premier AC or n'est pas sous la commande du premier AC, et
dans le cas où le point de terminaison sans fil n'est pas sous la commande du premier AC,
l'unité d'établissement (10) est configurée en outre pour établir un deuxième tunnel d'extension CAPWAP entre le point de terminaison sans fil et le premier AC ; et l'unité d'envoi (30) est configurée pour envoyer, par l'intermédiaire du deuxième tunnel d'extension CAPWAP, les premières informations de mesure au premier AC ; ou
l'unité d'établissement (10) est configurée en outre pour établir un troisième tunnel d'extension CAPWAP entre le point de terminaison sans fil et un WTP sous la commande du premier AC ; et
l'unité d'envoi (30) est configurée pour envoyer, par l'intermédiaire du troisième tunnel d'extension CAPWAP, les premières informations de mesure au WTP sous la commande du premier AC qui envoie les premières informations de mesure au premier AC.

11. Point de terminaison sans fil selon la revendication 9, dans lequel le second WTP est sous la commande d'un second AC or n'est pas sous la commande d'un AC.

12. Point de terminaison sans fil selon la revendication 9, dans lequel
l'unité de réception (20) est configurée en outre pour recevoir un type de connexion envoyé par le second WTP, dans lequel le type de connexion est un tunnel d'établissement de liaison directe tunnellisée, TDLS, ou un tunnel selon le protocole de sécurité de couche de transport de datagrammes, DTLS ;
l'unité d'envoi (30) est configurée en outre pour envoyer le type de connexion au second WTP, afin d'amener le second WTP à établir un tunnel de transmission entre le second WTP et le point de terminaison sans fil en fonction du type de connexion ; l'unité de réception (20) est configurée en outre pour recevoir, par l'intermédiaire du tunnel de transmission, un message de demande de rattachement envoyé par le second WTP ; et
l'unité d'envoi (30) est configurée en outre pour envoyer, par l'intermédiaire du tunnel de transmission, un message de réponse de rattachement au second WTP, pour amener le second WTP à établir le premier tunnel d'extension CAPWAP entre le second WTP et le point de terminaison sans fil.

13. Contrôleur d'accès pour commander des points de terminaison sans fil, comprenant :
une unité de réception (130), configurée pour recevoir des premières informations de mesure envoyées par un premier WTP, dans lequel les premières informations de mesure sont reçues par le premier WTP depuis un second WTP par l'intermédiaire d'un premier tunnel d'extension CAPWAP, les premières informations de mesure comprennent au moins des informations de mesure de canal, et le second WTP n'est pas sous la commande du point de commande sans fil ;
une unité de traitement (131), configurée pour générer des premières informations de configuration d'un WTP sous la commande du point de commande sans fil en fonction de secondes informations de mesure envoyées par le WTP sous la commande du point de commande sans fil et des premières informations de mesure ; et
une unité d'envoi (132), configurée pour envoyer les premières informations de configuration au WTP sous la commande du point de commande sans fil afin de configurer un canal sans fil du WTP sous la commande du point de commande sans fil, de telle sorte que le WTP sous la commande du point de commande sans fil évite un brouillage causé par un autre WTP.

14. Contrôleur d'accès selon la revendication 13, dans lequel
l'unité de traitement (131) est configurée en outre pour générer des secondes informations de configuration du second WTP en fonction des premières informations de mesure et des secondes informations de mesure ; et
l'unité d'envoi (132) est configurée en outre pour envoyer les secondes informations de configuration au premier WTP, pour amener le premier WTP à envoyer les secondes informations de configuration au second WTP, afin de configurer un canal sans fil du second WTP, de telle sorte que le second WTP évite un brouillage causé par un autre WTP.

15. Contrôleur d'accès selon la revendication 13, dans lequel le premier WTP est sous la commande du point de commande sans fil ou n'est pas sous la commande du point de commande sans fil, et
dans le cas où le premier WTP n'est pas sous la commande du point de commande sans fil,
le point de commande sans fil comprend en outre une unité d'établissement (133) configurée pour établir un deuxième tunnel d'extension CAPWAP entre le point de commande sans fil et le premier WTP ; et l'unité de réception (130) est configurée en outre pour recevoir, par l'intermédiaire du deuxième tunnel d'extension CAPWAP, les premières informations de mesure envoyées par le premier WTP ; ou
l'unité de réception (130) est configurée en outre pour recevoir les premières informations de mesure envoyées par un WTP sous la commande du point de commande sans fil, dans lequel les premières informations de mesure sont reçues par le WTP sous la commande du point de commande sans fil par l'intermédiaire d'un troisième tunnel d'extension CAPWAP entre le WTP sous la commande du point de commande sans fil et le premier WTP.

16. Contrôleur d'accès selon la revendication 15, dans lequel
l'unité de réception (130) est configurée en outre pour recevoir un message de demande d'événement envoyé par le WTP sous la commande du point de commande sans fil, dans lequel le message de demande d'événement comporte des informations au sujet du premier WTP ; et
l'unité d'envoi (132) est configurée en outre pour envoyer un message de réponse d'événement au WTP sous la commande du point de commande sans fil en fonction des informations au sujet du premier WTP, afin d'amener le WTP sous la commande du point de commande sans fil à envoyer une a instruction d'autorisation de gestion au premier WTP en fonction du message de réponse d'événement, dans lequel l'instruction d'autorisation de gestion est configurée pour ordonner au premier WTP d'établir un deuxième tunnel d'extension CAPWAP entre le premier WTP et le point de commande sans fil.
